# EUROPEAN PATENT SPECIFICATION

(11) **EP 2 066 141 B1**
(45) Date of publication and mention of the grant of the patent: **27.08.2014**
(21) Application number: 07301605.7
(22) Date of filing: 30.11.2007
(51) Int. Cl.: H04W 72/08

(54) **Method for performing resource allocation in a wireless communication network, base station and wireless communication network**
Verfahren zur Durchführung der Ressourcenzuweisung in einem drahtlosen Kommunikationsnetzwerk, Basisstation und drahtloses Kommunikationsnetzwerk
Procédé pour effectuer une attribution de ressource dans un réseau de communication sans fil, station de base et réseau de communication sans fil

(43) Date of publication of application: 03.06.2009
(60) Divisional application: 14290184.2
(73) Proprietor: ALCATEL LUCENT, 92100 Boulogne-Billancourt (FR)
(72) Inventor: Schaepperle, Joerg, Dipl. -Ing., 70180, Stuttgart (DE); Münzner, Roland, 73266, Bissingen/Teck (DE)
(74) Representative: Wetzel, Emmanuelle

(56) References cited:
- EP-A- 1 662 825
- EP-A- 1 763 191
- WO-A-98/29988
- WO-A-03/105513
- WO-A-2006/096864
- WO-A1-2006/069302
- US-A1- 2004 176 097
- US-A1- 2005 272 432
- US-B1- 7 110 785

## Description

### BACKGROUND OF THE INVENTION

The present invention relates to a method of performing resource allocation to a mobile terminal in a wireless communication network, said wireless communication network comprising a plurality of base stations, each of said plurality of base stations serving a cell, each cell comprising a plurality of sectors. The invention further relates to a plurality of base stations for performing said method and to a wireless communication network comprising said plurality of base stations.

Due to the increasing popularity of wireless communication, especially high speed broadband wireless communication, wireless communication systems comprising bandwidth efficient multiple access schemes are of particular interest. Wireless systems are shared media systems. There is a fix available bandwidth which must be shared among all the users of the system. It is therefore desired that wireless, especially radio, access systems be as efficient as possible to maximize the number of users that can be served and to maximize the data rates at which the service is provided.

Typical wireless, especially radio, access networks are implemented as so called cellular systems which comprise a plurality of cells, served by base stations, which are controlled by radio network controllers. The base stations communicate over one or more wireless links with one or more mobile terminals, which are located inside the cell service area. The cell service area of a base station is the cell that is serviced by said base station. The cell may be divided into several sectors each consisting of a transceiver with a single or multiple antennas and RF chains and an area, a so called sector, typically served by that transceiver. A mobile terminal may for example be a mobile computer, a mobile phone or any mobile or even fixed device that is able to communicate wirelessly.

It is also known in the art that a cellular wireless system may experience intra cell and/or inter cell interference problems which limit the capacity of the system. The intra cell interference is the interference experienced by one user that is caused by other users communicating within the same cell. The inter cell interference is defined as the interference experienced by one user that is caused by other users communicating in cells other than the one in which the user is located. Inter cell interference is especially present at the borders of cells.

In the European Patent Application EP 1594260 Al a method for inter cell interference coordination is presented which employs power planning in a radio communication system employing multi carrier techniques such as OFDM (Orthogonal Frequency Division Multiplex). In this method in each cell a border cell region and an inner cell region is identified. Power planning is applied to terminals which communicate from the border cell region of a cell.

In current broadband wireless access networks coverage and throughput are limited by co-channel interference. Co-channel interference can be due to intra cell interference or due to inter cell interference. In OFDM systems co-channel interference is typically caused by inter-cell interference. Coverage and throughput are especially limited by co-channel interference in radio communication networks where the full set of radio resources can potentially be allocated at all points in the wireless network area. Those networks are also known as frequency re-use 1 networks. Frequency re-use in general describes an allocation of frequency sets also called channels to cells based on a predetermined pattern. In frequency re-use 1 systems the same frequency sets or channels are assigned to all cells in the system.

### OBJECT OF THE INVENTION

The object of the invention is to increase coverage and throughput in wireless communication networks, especially in frequency re-use 1 networks. It is another object of the invention to provide a plurality of base stations in a wireless communication network providing increased coverage and throughput. It is another object of the invention to provide a wireless communication network, especially a frequency re-use 1 network, with increased coverage and throughput.

### SUMMARY OF THE INVENTION

These objects and others that appear below are achieved by a method for performing resource allocation to a mobile terminal according to claim 1, a plurality of base stations of a wireless communication network according to claim 9 and a wireless communication network comprising said plurality of base stations according to claim 17 and a base station according to claim 24.

In US 2005/0272432 A1 method for resource allocation is described which allocates resources specific to sectors of a cell in order to avoid or reduce intra-cell interference.

In WO 98/29988 A1 resource allocation in cellular wireless communication systems is described.

In WO 03/105513 A2 a method for bandwidth allocation in a cell is described. Bandwidth allocation is optimized for sectors in the cell by allocating fractions of total bandwidth to the sectors of the cell.

US 2004/0176097 A1 discloses a method for allocating sub-channels of MIMO channels in a wireless network. A mobile equipment may be connected to several channels being served by two base stations. A radio network controller splits the traffic of the user equipment between the two base stations.

US 7 110 785 B1 discloses a power control in a mobile communications system. A special DTX mode is introduced, in which a mobile is not transmitting traffic but in which the base station monitors errors of bits transferred in a pilot channel, so that the ratio of energy per bit to noise spectral density can be measured for power control purposes. This publication mentions that a hand-over of a mobile can be performed between base stations. Also, the base station may measure the block error rate of bits transferred in the pilot channel.

According to a first aspect of the invention, coverage and throughput in a wireless communication network, especially a radio communication network, is increased by coordinating the transmissions between different base stations and different sectors of said base station. A mobile terminal communicates with one or more base stations over one or more wireless links. The wireless channel in a wireless communication network or the radio channel in a radio communication network is a resource shared in between several terminals communicating using said wireless or radio communication network. Wireless or radio resources have therefore to be allocated to mobile terminals by resource allocation modules. In OFDM systems radio resources are time slots or subcarriers in the frequency domain. In CDMA systems radio resources may also be spreading codes. Preferably, resource allocation modules serve a sector of a cell each. It is also possible, that a resource allocation module serves more than one sector of a cell, all sectors of a cell or even sectors of different cells. Coordinating the transmissions of different base stations is especially useful in areas (terminal positions) where the terminals receives signals with similar strength from different base stations or different base stations receive the signal from one terminal with similar strength. In conventional systems this is the cell edge area and the different signals interfere each other. Serving a terminal by different sectors means that the sector areas overlap. The interference is reduced and the signal quality improved by constructive superposition.

According to another aspect of the invention, the link quality of a wireless link or wireless links in between a mobile terminal and one or more base stations is measured. Depending on the outcome of this measurement wireless resources are allocated to the terminal. Wireless resources are allocated in one or more serving sectors. The serving sectors can be located in one cell or in several cells of the communication network. Among the resource allocation modules associated with the serving sectors of a terminal the allocation of radio resources must be coordinated. One solution is to determine one master resource allocation module. The master resource allocation module allocates the resources to the mobile terminal in the serving sectors. Other methods for coordination of the allocation of radio resources among the resource allocation modules associated with the serving sectors would be to make negotiations among the resource allocation modules or to make votes among the resource allocation modules. Each module can for example make proposals and the other resource allocation modules can agree or disagree. If all resource allocation modules agree or a majority of them agrees, the proposal is turned into a decision. The resource allocation module assigned to a sector is responsible for coordinating the resource allocations for different terminals in that sector. To prevent unwanted multiple allocations of the same resource, it has for example to communicate with the master resource allocation modules responsible for that allocations.

According to one embodiment of the invention, in each of the serving sectors the transmitters associated with the serving sectors transmit the same information on the same radio resources to the mobile terminal. In the serving sectors the receivers associated with the serving sectors receive information from the mobile terminal.

According to the inventive method, the number of transmitters that transmit the same information to the mobile terminal and the number of receivers that process the signals received from the mobile terminal at the base station of the serving sectors are selected in dependence of the link qualities between the mobile station and different base stations.

According to a preferred embodiment of the invention the downlink signals from different transmitters are added in the air by using RF (radio frequency) combining. This is especially advantageous for OFDM systems. The sum signal can be received with a single antenna at the terminal. By applying the invention, a performance gain is achieved by using a single antenna at the mobile terminal. No further processing at the mobile terminal is necessary to achieve the gain.

According to another preferred embodiment of the invention the uplink signals received by different receivers are combined at a master base station. A master base station may be the base station comprising said master resource allocation module. The combination of the signals received by different receivers is preferably done using signal processing.

According to another embodiment of the invention the downlink signals transmitted by the transmitters associated with the serving sectors are pre coded in such a way that they superpose advantageously at the receiver or can be processed by the receiver in such a way that a performance gain is achieved. Pre coding can e.g. be done in such a way that the different signals arriving at the receiver have the same phase on each subcarrier at every time or in such a way that based on average channel statistics the probability for constructive superposition is increased.

According to another preferred embodiment of the invention, the resource allocation module is a layer 2 module, preferably a media access control (MAC) instance. The information exchange in between different Radio Access Modules can be over layer 2 or layer 3.

According to another embodiment of the invention, the traffic requirements of the wireless links in between said mobile terminal and the base stations is measured. The allocation of the wireless resources is then done also taking into account the measured traffic requirements.

In another preferred embodiment of the invention a master resource allocation module is determined among candidate resource allocation modules. The candidate resource allocation modules are the resource allocation modules associated with the one or more serving sectors. For each radio resource (time/frequency interval) a different master resource allocation module can be determined, depending on the mapping of frequency resources to terminals. Typically one master resource allocation module is required per terminal. It coordinates the resource allocations in the resource allocation modules of all sectors that serve the terminal and allocates all resources used for said terminal.

According to another aspect of the invention the plurality of base stations in a wireless communication network are adapted to measure link quality of a wireless link or wireless links to a mobile terminal. The plurality of base stations comprise means for determining one or more serving sectors and means for determining a master resource allocation module. The serving sectors are located in the cells being served by said plurality of base stations. The serving sectors are determined according to the measured link quality to the mobile terminal. The master resource allocation module allocates wireless resources to the mobile terminal. It allocates resources of the serving sectors. The master resource allocation module is one of the resource allocation modules associated with the serving sectors.

According to a preferred embodiment of the invention the plurality of base stations is preferably comprised in a frequency re-use 1 network. The same frequency resources are therefore allocated by all the base stations in the network.

According to a preferred embodiment of the invention the resource allocation modules are layer 2 modules, preferably media access control (MAC) instances.

According to another preferred embodiment of the invention the plurality of base stations are adapted to measure traffic requirements between base stations and mobile terminal. The traffic requirements are requirements concerning the quantity of data that is to be transmitted. The traffic requirements are measured in addition to the link quality of the one or more wireless links. The decision on the serving cell sectors is then taken depending on the quality of the link and the traffic requirements.

According to another preferred embodiment of the invention, the determination of a master resource allocation module is performed by the resource allocation modules associated with the one or more serving sectors. The resource allocation modules are comprised in one ore more base stations.

According to another aspect of the invention, the wireless communication network, preferably a frequency re-use 1 radio network, offers increased coverage and throughput by coordination of the wireless transmission between different base stations and different sectors of the base station. According to a preferred embodiment of the invention the base stations are connected by logical or physical links between the base stations. A logical link might be a link via a core network. A physical link might be a direct link made of e. g. wire, fibre, wireless, radio, optical, microwaves etc.

The plurality of base stations might be of the same type. It is also possible to apply and coordinate different types of base stations, e. g. of different wireless standards.

According to another aspect of the invention coverage and throughput are optimised by selecting appropriate modes of operation. A mode of operation is characterised by the serving sectors involved in the resource allocation to the mobile terminal. The mode of operation is determined using measured link performance data and optionally traffic requirements per mobile terminal and link. Traffic requirements are for example required data rates per mobile terminal and link. The mode of operation is derived from said measured data by applying appropriate algorithms. Depending on the mobile terminals the different locations of mobile terminals and the different link qualities and data rate requirements, different modes of operation can be applied to different mobile terminals.

### BRIEF DESCRIPTION OF THE DRAWINGS

Other characteristics and advantages of the invention will become apparent in the following detailed description of preferred embodiments of the invention illustrated by the accompanying drawings given by way of non limiting illustrations. The same reference numerals may be used in different figures of the drawings to identify the same or similar elements.
Figure 1 shows the schematic overview over a wireless communication network comprising three base stations and three cells,
Figure 2 shows a schematic overview over a wireless communication network comprising seven cells and seven corresponding base stations,
Figure 3 shows a schematic overview over a wireless communication network with sectors,
Figure 4 shows a schematic overview over a wireless communication network with areas comprising sectors,
Figure 5 shows an overview over a wireless communication network with thirteen cells and thirteen corresponding base stations with areas comprising sectors,
Figure 6 shows an overview over a wireless communication network comprising seven cells and seven base stations with areas comprising parts of sectors of cells.

### DETAILED DESCRIPTION OF THE INVENTION

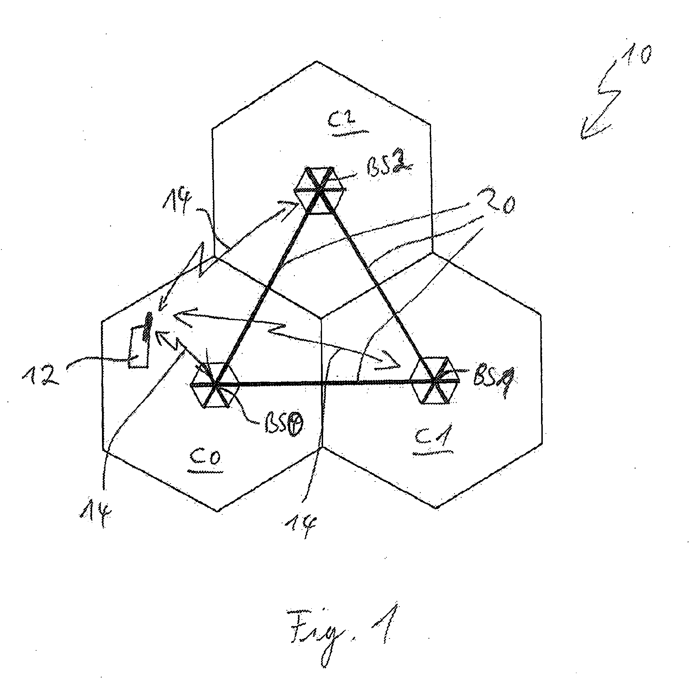

Shown in figure 1 is a schematic overview of a wireless telecommunication network 10 comprising three cells C0, C1 and C2 and corresponding base stations BS0, BS1 and BS2. The base stations BS0, BS1 and BS2 are connected by links 20. The links 20 can be logical or physical links between the base stations BS0, BS1 and BS2. A logical link 20 is for example a link via the core network. The physical link 20 is a direct connection between the base stations for example, wire, fibre, wireless, optical, microwave, wireless, radio etc. Figure 1 also shows a mobile terminal 12 connected to the base stations BS0, BS1 and BS2 over wireless links 14. The links 20 between the base stations BS0, BS1, BS2 can transport useful information to be transmitted to mobile terminal 12 or to be received from mobile terminal 12. The links 20 can also transport information required for wireless resource allocation e. g. radio resource allocation either in form of real time information or signals statistics. In a preferred embodiment of the invention the links 20 are local, meaning that they are in between directly neighboured base stations.

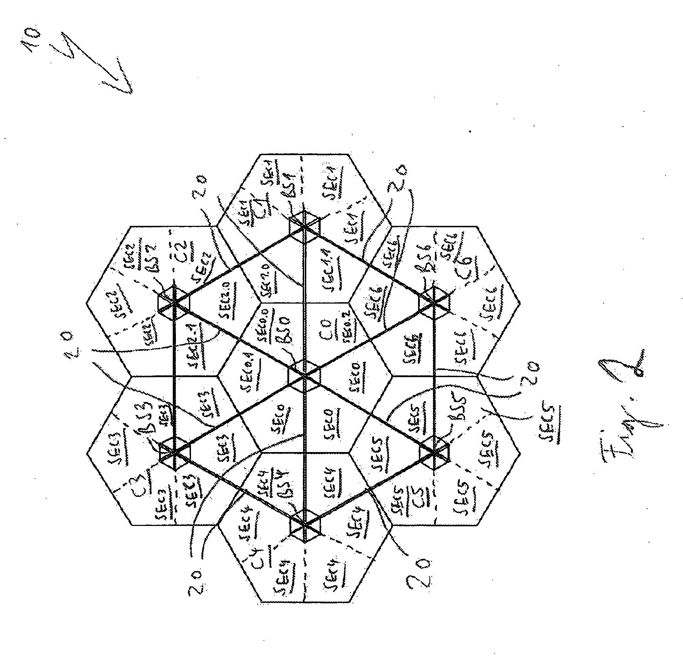

In figure 2 a wireless communication network is shown. The wireless communication network comprises 7 cells C0, C1, C2, C3, C4, C5 and C6 and corresponding base stations BS0, BS1, BS2, BS3, BS4, BS5 and BS6. Neighbouring base stations are connected by links 20. In the example shown in figure 2, each cell is divided into six sectors. Cell C0 is for example divided into sectors SEC0.2, SEC0.1, SEC0.0 and three sectors SEC0. The cell C1 is for example divided into six sectors SEC1.0, SEC1.1, and four sectors SEC1. The cell C2 is for example divided into six sectors SEC2.0, SEC2.1 and four sectors SEC2. The cell C3 is for example divided into six sectors SEC3. The cell C4 is for example divided into six sectors SEC4. The cell C5 is for example divided into six sectors SEC5. The cell C6 is for example divided into six sectors SEC6.

Resource allocation in the cells C0, C1, C2, C3, C4, C5 and C6 is done per sector of the cell. In a preferred embodiment of the invention one resource allocation module is associated with each sector. In a preferred embodiment of the invention each sector is served by one transmitter and by one receiver at the base station. One sector can of course be served by more than one receiver and/or more than one transmitter or a transmitter/receiver with multiple antennas.

In a preferred embodiment of the invention layer 2 media access control instances act as resource allocation modules. Link performance data and traffic requirements are measured per terminal and per wireless link 14 at the base stations BS0, BS1, BS2, BS3, BS4, BS5 and BS6.

The network 10 can be operated in different modes of operation, characterised by the mappings of sectors incl. their transceivers, resource allocation modules and wireless resources to terminals at a given time. Different modes of operation are also characterised by the numbers of sectors and resource allocation modules serving one terminal and their interactions. Coverage and throughput are optimised by selecting appropriate modes of operation using measured link performance data per link 14 and traffic requirements per user terminal 12 and appropriate algorithms to derive the modes of operation for different mobile terminals 12 at different locations with different link qualities and different data rate requirements. Traffic requirements are for example required data rates per user terminal 12 i.e. per logical link between terminal and network comprising one or more radio links 14. Each of the base stations BS0, BS1, BS2, BS3, BS4, BS5, BS6, BS7, BS8 , BS9, BS10, BS11 and BS12 shown in one of the figures 1 to 6 is adapted to perform the inventive method.

Each of the base stations BS0 to BS12 has means for measuring link quality of links 14 to mobile terminals 12. Each of the base stations BS0 to BS12 has means for measuring traffic requirements per link 14. Each base station BS0 to BS12 also has means for collecting quality information for links 14 measured by neighbouring base stations for the same mobile terminal 12 and has means for collecting traffic requirements information for a mobile terminal 12 measured by the neighbouring base stations.

Each of the base stations BS0 to BS12 may have means to determine in cooperation with other base stations a master allocation module for making scheduling decisions. The master resource allocation module performs a resource allocation for a mobile terminal 12. Each base station BS0 to BS12 is adapted to execute the resource allocation performed by the master resource allocation module. This means each base station BS0 to BS12 executes one of several modes of operation for resource allocation per terminal depending on the link qualities and traffic requirements. Each base station BS0 to BS12 is also adapted to distributing useful information to be transmitted to a mobile terminal 12 to several neighbouring base stations and is adapted to collect useful information received by neighbouring base stations from a mobile terminal 12. Each base station BS0 to BS12 is also adapted to process and to combine the useful information received from the neighbouring base stations.

In a preferred embodiment of the invention, each base station serves a sector by exactly one antenna. In another preferred embodiment of the invention each base station serves a sector by multiple antennas. In this embodiment each base station BS0 to BS12 has means to process multiple antenna signals for each wireless link 14 between the base station and the mobile terminal 12. Mixed topologies are also possible with some sectors being served by exactly one antenna and other sectors being served by multiple antennas. The one antenna - multiple antenna mixture is possible within one cell or within the network 10. It is also possible that one cell has exactly one antenna per sector and another cell has multiple antennas per sector.

The signal combination in uplink can be done in various ways. The signals sent by a mobile terminal 12 and received by different base stations BS - can for example be processed in the following ways.

According to one embodiment of the invention, the signals are transported to a common location, e. g. one of the base stations BS, before the signals are combined. The transport to the common location is for example done via the network 20, e. g. the fixed network, connecting the base stations BS. Radio Frequency (RF) signals can then be added and further processed as in the single base station case. Received RF signals can also be converted to the base band and added in the base band without further pre-processing. Another possibility is to add the base band signals with weights. The weights can for example depend on the signal strengths. The base band signals can also be pre-processed, e.g. equalized and then added. Preferably, the base band signals are added with weights and/or equalized and then added.

The pre-processing of the signals can also take place at the transmitter of the mobile terminal 12.

According to another embodiment of the invention, the strongest signal is selected upon reception, converted to the base band and transported to the common location for further processing, e. g. error correction. According to another embodiment, the received signals are converted to the base band. The baseband signals are then demodulated and/or decoded individually and the demodulated/decoded data is transported to a common location. Further processing, e. g. error correction, then takes place at the common location. Preferably, the signals are be demodulated and decoded individually and only data that can be decoded without errors is transported to the common location.

In the downlink direction from the one or more base stations over the one or more wireless links 14 the signals are preferably always added in the air. If the terminal has only one antenna, especially in the OFDM case, the sum signal can be received and processed like a conventional multi-path signal. In this case it can be advantageous to pre-process the signals at the one or more base station transmitters. The pre-processing at the one or more base stations can be done in such a way, that - depending on channel conditions - they combine coherently in the complete frequency band. Pre-processing is not necessary to achieve a performance gain but can increase the gain. If the mobile terminal 12 has more than one antenna, the components of the sum signal can be separated, e.g. according to their direction of arrival and processed similar to the uplink signals.

A preferred embodiment of the inventive method for resource allocation by selecting different modes of operation comprises the following steps. First, link quality of links 14, to and from several different mobile terminals 12 are measured via different base stations. Second, traffic requirements for the mobile terminal 12 are measured or determined in another way. Then a criterion for system performance, e.g. the average throughput per area, for different modes of operation is calculated. Areas comprise one or more parts of sectors or one or more sectors. Then a mode of operation is selected that maximises the system performance criterion. The optimisation can be done per average throughput as described above or for some other criterion or criteria.

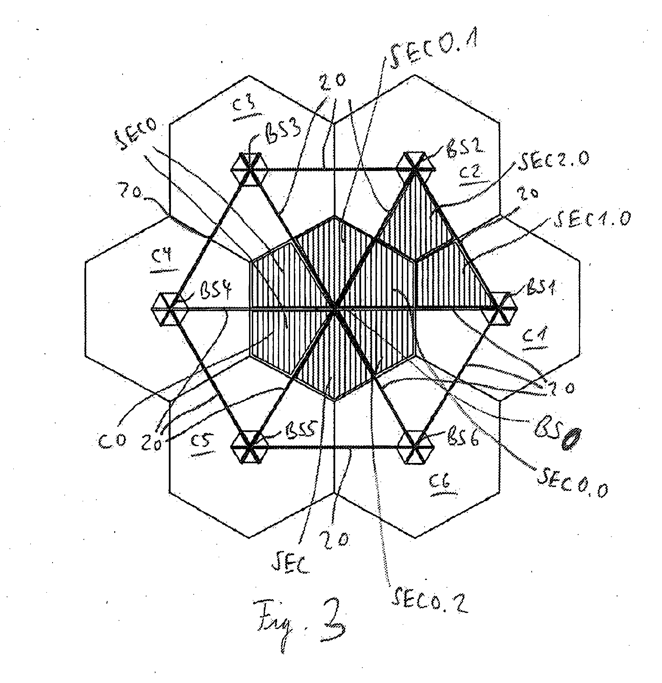

In the example shown in figure 3, which shows one possible mode of operation, each of the sectors of cell C0, SEC0.0 SEC0.1 SEC0.2 and three sectors SEC0, is served by base station BS0 and exactly one resource allocation module. The serving resource allocation module performing the resource allocation is in the example shown in figure 3 the resource allocation module associated with the sector in which the mobile terminal 12 is located. The hatched sector SEC2.0 in cell C2 is served by the resource allocation module associated with the sector SEC2.0 of base station BS2. A mobile terminal 12 being located in sector SEC1.0 of cell C1 is served by the resource allocation module associated with the sector SEC1.0 in base station BS1. In this mode of resource allocation the coverage is limited due to interference at the borders of the sectors.

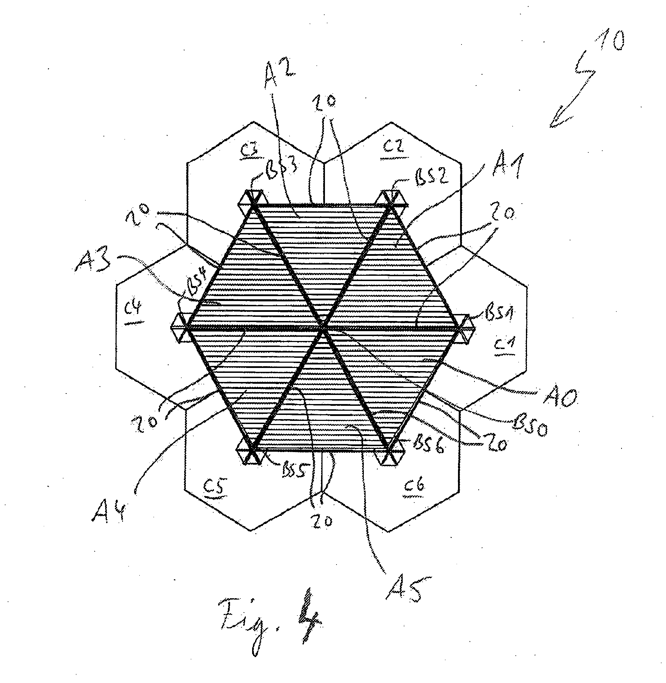

The hatched areas A0, A1, A2, A3, A4 and A5 shown in figure 4, which shows a second mode of operation, comprise 3 sectors. Area A0 for example comprises one sector of cell C6, one sector of cell C1 and one sector of cell C0. Area A1 for example comprises one of the original sectors of cell C2, one sector of cell C1 and one sector of cell C0. It can be seen as a new sector that is served by three base stations. It resulted from enlarging the reach of the original sectors and combining them into one. Area A2 for example comprises one sector of cell C2, one sector of cell C3 and one sector of cell C0. Three sectors with their transceivers and three resource allocation modules are involved in servicing each of these areas. For area A1 for example, this is the resource allocation module in base station BS1 which services the sector SEC1.0, the resource allocation module in base station BS2 which services the sector SEC2.0 and the resource allocation module in base station BS0 which services the sector SEC0.0. Information about and from the resource allocation modules and parts of the useful data has to be exchanged between the base stations involved in resource allocation for the hatched areas. For the downlink, radio frequency (RF) combining in the air can be used. For OFDM systems for example, the RF combining in the air can for example be done with the relative propagation delay within the cyclic prefix The sum signal can be received with one antenna and processed like a signal from only one base station, as long as the propagation delay difference is within the cyclic prefix duration. The components from different base stations look for the receiver like multi-path components due to reflections. An OFDM receiver is designed to handle such multipath signals. For other systems like e.g. CDMA synchronization may be required. For uplink, selection or base band combining of the signals received by different sectors can be applied. This can be done coherently or non-coherently.

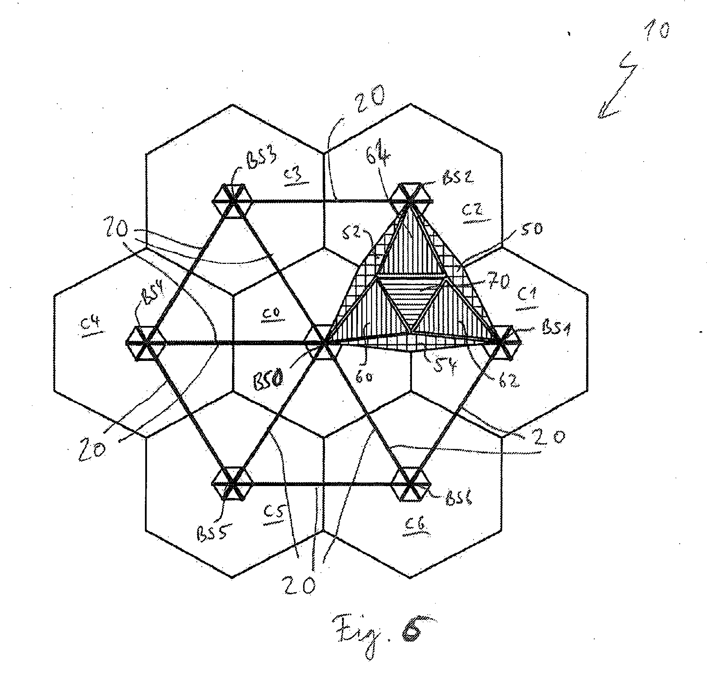

In the operation mode shown in figure 4 the coverage is increased compared to the operation mode in figure 3 by improving the signal-to-noise-and-interference ratio (SINR) at locations that are in the inner of the regions in figure 4 but at the borders of the regions in figure 3. But the throughput per area for this mode of operation may be reduced compared to the first mode of operation due to a larger area for resource allocation and the higher number of serving sectors per terminal. This is due to the fact that a master resource allocation module allocates a wireless resource, e. g. radio resource, once per area served. In the example given in figure 4 this means that a wireless resource, e. g. radio resource, is allocated once for three original sectors which are comprised in an area. The issue of throughput reduction when using this mode of operation in the complete cell will be addressed later with the method described in figure 6. There, the modes of operation are selected in such away that the overall throughput is increased.

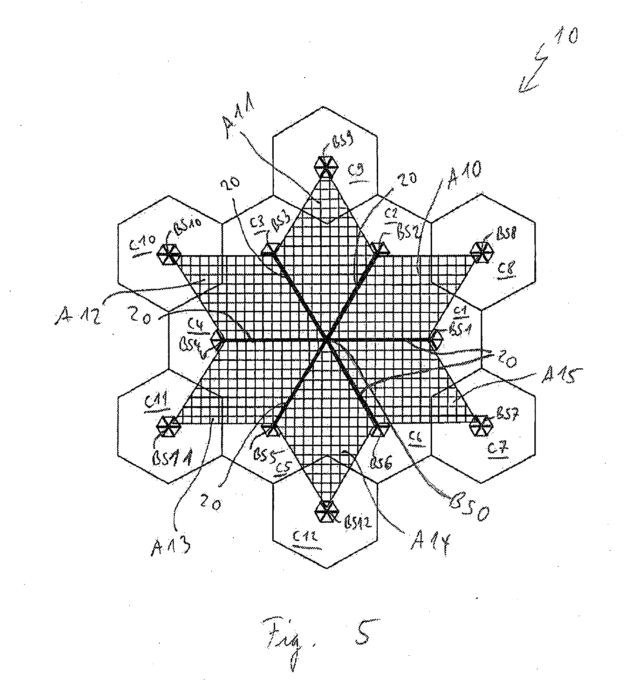

In figure 5, a third example of an operation mode is shown. The part of the network shown in figure 5 comprises thirteen cells, C0, C1, C2, C3, C4, C5, C6, C7, C8, C9, C10, C11 and C12, with their corresponding base stations, BS0, BS1, BS2, BS3, BS4, BS5, BS6, BS7, BS8, BS9, BS10, BS11 and BS12. Shown are hatched areas A10, A11, A12, A13, A14 and A15. Each area comprises six sectors of four different cells. Area A10 for example comprises one sector of cell C8, one of the sectors SEC1 of cell C1, one of the sectors SEC2 of cell C2 and sectors SEC1.0, SEC2.0 and sector SEC0.0. In between the six resource allocation modules associated with the six sectors of the area A10, one master resource allocation module is determined. The same applies to the other areas A11 to A15. A wireless resource, e. g. radio resource, is allocated once in the six sectors. This improves the SINR at further locations, but may reduce throughput per area A10, A11, A12, A13, A14 or A15. The mode of operation shown in figure 5 increases coverage especially for users on the direct line between two direct neighbour base stations (e.g. BS2 and BS3). To increase coverage on the direct line between BS0 and BS3 another mode of operation involving base stations BS0, BS2, BS3 and BS4 in serving one terminal can be chosen.

In figure 6 an example of an inter-cell coordination is shown. In the example shown, an operation mode depending on the location of the mobile terminal 12 is chosen. The location of a mobile terminal 12 within a cell is determined by measuring link quality of link 14. Link quality is preferably measured by one or more base stations. The information on link quality is exchanged in between the base stations over the links 20. Base stations BS0, BS1 and BS2 have links 20 in between them. To improve visibility those links 20 in between base stations BS0, BS1 and BS2 are not shown in figure 6 but they are present. They are for example shown in figure 1.

If a mobile terminal 12 is within the area 70 shown in figure 6, a mode of operation as described with reference to figure 4 is applied. Area 70 covers parts of the sectors SEC0.0, SEC1.0 and SEC2.0. The terminal is served by sectors SEC0.0, SEC1.0 and SEC2.0. The three resource allocation modules involved in the resource allocation are the resource allocation module associated with sector SEC0.0, the resource allocation module associated with sector SEC2.0 and the resource allocation module associated with sector SEC1.0. Those three resource allocation modules coordinate the resource allocation e.g. by determining a master resource allocation module which coordinates the resource allocation. The three resource allocation modules involved in the resource allocation, if a mobile terminal 12 is located in area 70, are located in base stations BS0, BS1 and BS2. If a mobile terminal 12 is located in one of the areas 62, 64 or 60 then a mode of operation is applied which has been described with reference to figure 3. If a mobile terminal 12 is located within one of the areas 60, 62 or 64 then it is served by one sector and one resource allocation module does the resource allocation for this mobile terminal. If the mobile terminal is within the area 60, then it is within the sector SEC0.0 and the resource allocation is done by the resource allocation module associated with sector SEC0.0 in base station BS0. If the mobile terminal 12 is located within the area 62, then it is within the sector SEC1.0. The resource allocation is done by the resource allocation module as associated with the sector SEC1.0. This resource allocation module is in base station BS1. If the mobile terminal 12 is located within the area 64, then the mobile terminal 12 is located within the sector SEC2.0 the resource allocation is performed by the resource allocation module associated with sector SEC2.0. This resource allocation module is in base station BS2.

Preferably, the mode of operation for a terminal is determined by the link quality measurements. The areas in figure 6 show regions where the link qualities are typically so that the corresponding mode of operation is appropriate. In real operation the areas may be different, for example depending on the geographic conditions.

Preferably, the selection of the mode of operation is based on long-term statistics of the channel, e.g. mean path loss, which varies only slowly with the position of the terminal and not as fast as the instantaneous channel state due to fast fading. These statistics are correlated with the position of the terminal.

If the mobile terminal 12 is located in one of the areas 50, 52 or 54 then a mode of operation is applied which has been described with reference to figure 5. In the resource allocation for area 50 for example six sectors with their transceivers and six resource allocation modules are involved. Involved are resource allocation modules associated with one of the sectors SEC8 of cell C8 with one of the sectors SEC1 of cell C1, one of the sectors SEC2 of cell C2 and with the sectors SEC1.0, SEC2.0 and SEC0.0. Among those six resource allocation modules one master resource allocation module is determined which performs the resource allocation. The same case applies, when the mobile terminal 12 is located within area 52 or area 54.

Generally speaking, an operation mode is selected dependent on link qualities. Preferably modes are used with high average throughput per area i.e. low number of serving sectors. Where necessary, modes with higher number of serving sectors are used to increase coverage and average cell edge throughput. Depending on the link qualities and the interference situation, the wireless resource, e. g. radio resources, are allocate to one mobile terminal 12 and must be reserved in 1, 3 or 6 sectors. The base stations involved in the resource allocation exchange the information needed over the links 20. The described method increases coverage and at the same time increases average system throughput per area.

At the same time the total transmitted power per area can remain the same and the antenna sites can remain the same as well. One antenna at the mobile terminal 12 can be sufficient. This reduces cost at the mobile terminal 12.

One antenna per sector can be sufficient as well, but multiple antenna technologies can be used in addition. Multiple antenna technologies that can be applied comprise for example beam forming, multiple input multiple output techniques, including for example multiple cell/sector antennas or multiple user antennas. The use of these multiple antenna technologies can increase throughput by spatial multiplexing within the areas.

The invention offers improved coverage in the wireless communication network 10 and at the same time improved average throughput per cell. The same antenna sites as current solutions can be used. The invention can be applied to increase coverage and throughput using the same antenna sites. The total transmission power within a cell can stay the same. Wireless resources, e. g. radio resources, are better utilised and throughput is distributed more evenly among different mobile terminals 12 with different link qualities of links 14. The full set of wireless resources e. g. radio resources can be made available at all points in the wireless network area. This allows for a true frequency re-use 1 as the invention performs the interference coordination within the wireless communication network 10.

According to another aspect of the invention the links 20 in between the base stations can be used for inter cell coordination of interference. The links 20 can be used for traffic coordination in between the cells. This allows for combination of signals to and from different base stations using signal processing. A coherent combining of signals is possible. Capacity or coverage limitations can be overcome. The spatial signal to noise ratio distribution in cells can be improved.

## Claims

1. Method for performing resource allocation to a mobile terminal (12) in a wireless communication network (10), said wireless communication network (10) comprising a plurality of more than two base stations (BS0 - BS12), each of said base stations serving a cell, each cell comprising a plurality of sectors; the method comprising the steps of
measuring link quality of more than one wireless links (14) in between said mobile terminal (12) and more than one of said base stations (BS0 - BS12),
allocating wireless resources to said mobile terminal (12) in more than one serving sectors, said serving sectors being more than one of said sectors (SEC0.0, SEC0.1, SEC0.2 SEC0, SEC1.0, SEC1.1, SEC1, SEC2.0, SEC2.1, SEC2, SEC3 - SEC12) in more than one of said cells (C0 - C12), whereas each cell comprises a plurality of resource allocation modules, each of said resource allocation modules being associated with at least one of said sectors (SEC0.0, SEC0.1, SEC0.2, SEC0, SEC1.0, SEC1.1, SEC1, SEC2.0, SEC2.1, SEC2, SEC3 - SEC12), and whereas the resource allocation is performed by the one or more resource allocation modules associated with said more than one serving sectors.

2. Method according to claim 1, **characterized by**
the wireless communication network (10) being a radio communication network where the full set of radio resources can potentially be allocated at all points in the radio communication network area.

3. Method according to claim 1, **characterized by**
measuring traffic requirements of the more than one wireless links (14) in between said mobile terminal (12) and more than one of said plurality of base stations (BS0 BS12).

4. Method according to claim 1, **characterized by**
performing signal processing on the signals received at more than one of said plurality of base stations (BS0 - BS12) from the mobile terminal (12) over the more than one wireless links (14).

5. Method according to claim 1, **characterized by**
performing signal processing on the signals received at the mobile terminal (12) over the more than one wireless links (14) from the more than one of said plurality of base stations (BS0 - BS12).

6. Method according to claim 1, further comprising the step of
determining a master resource allocation module among the one or more resource allocation modules associated with said more than one serving sectors, said master resource allocation module performing the resource allocation in coordination with other involved resource allocation modules to said mobile terminal (12) in said serving sectors.

7. Method according to claim 6, **characterized by**
the determination of the master resource allocation module being performed by the resource allocation modules associated with more than one serving sectors.

8. Method according to claim 1, **characterized by**
each of said resource allocation modules being a Media Access Control (MAC) instance.

9. A plurality of base stations (BS0 - BS12) of a wireless communication network (10), each of said plurality of more than two base stations (BS0 - BS12) serving a cell (C0 - C12), each cell (C0 - C12) comprising a plurality of sectors (SEC0.0, SEC0.1, SEC0.2, SEC0, SEC1.0, SEC1.1, SEC1, SEC2.0, SEC2.1, SEC2, SEC3 - SEC12), whereas each of said base stations (BS0 BS12) is adapted to measure link quality of one or more wireless links (14) to a mobile terminal (12) and comprises means for determining more than one serving sectors, said serving sectors being more than one of said sectors (BS0 - BS12) in more than one of said cells (C0 - C12), whereas resource allocation to the mobile terminal (12) is performed in the more than one serving sectors, each cell (C0 - C12) comprising a plurality of resource allocation modules, each of said resource allocation modules being associated with at least one of said sectors (SEC0.0, SEC0.1, SEC0.2, SEC0, SEC1.0, SEC1.1, SEC1, SEC2.0, SEC2.1, SEC2, SEC3 - SEC12), whereas the resource allocation is performed by the one or more resource allocation modules associated with said more than one serving sectors.

10. A plurality of base stations (BS0 - BS12) according to claim 9,
**characterized by**
said plurality of base stations (BS0 - BS12) being base stations of a radio communication network where the full set of radio resources can potentially be allocated at all points in the radio communication network area.

11. A plurality of base stations (BS0 - BS12) according to claim 9,
**characterized by**
each of said plurality of base stations (BS0 - BS12) being adapted to measure traffic requirements of the one or more wireless links (14) to said mobile terminal (12).

12. A plurality of base stations (BS0 - BS12) according to claim 9,
**characterized by**
means for performing signal processing on the signals received from the mobile terminal (12) over the one or more wireless links (14).

13. A plurality of base stations (BS0 - BS12) according to claim 9,
**characterized by**
performing signal pre-processing on the signals transmitted to the mobile terminal (12) over the one or more wireless links (14).

14. A plurality of base stations (BS0 - BS12) according to claim 9, further
**characterized by**
means for determining a master resource allocation module among the one or more resource allocation modules associated with said more than one serving sectors, said master resource allocation module performing the resource allocation to said mobile terminal (12) in the more than one serving sectors.

15. A plurality of base stations (BS0 - B512) according to claim 14,
**characterized by**
the determination of the master resource allocation module being performed by the resource allocation modules associated with the more than one serving sectors.

16. A plurality of base stations (BS0 - BS12) according to claim 9,
**characterized by**
each of said resource allocation modules being a Media Access Control (MAC) instance.

17. A plurality of base stations of claim 9, wherein in each of the more than one serving sectors the transmitters associated with the more than one serving sectors transmit the same information on the same radio resources to the mobile terminal.

18. A plurality of base stations of claim 17, wherein the number of transmitters that transmit the same information to the mobile terminal and the number of receivers that process the signals received from the mobile terminal at the base station of the more than one serving sectors are selected in dependence of the link qualities, the receivers being associated with the more than one serving sectors.

19. A plurality of base stations of claim 18, wherein the downlink signals transmitted by the transmitters are pre coded in such a way that they superpose advantageously at the receiver or can be processed by the receiver in such a way that a performance gain is achieved.

20. A plurality of base stations of claim 17, the downlink signals from different transmitters are added in the air by using radio frequency combining.

21. A plurality of base stations of claim 9 being different types of base stations.

22. Wireless communication network (10) comprising a plurality of base stations (BS0 - BS12) according to claim 9 and a mobile terminal.

23. Wireless communication network according to claim 17, **characterized by** said wireless communication network being a radio network where the full set of radio resources can potentially be allocated at all points in the wireless network area.

24. A base station of the plurality of base stations of a wireless communication network according to claim 9.

## Patentansprüche

1. Verfahren zur Durchführung der Ressourcenzuweisung an ein mobiles Endgerät (12) in einem drahtlosen Kommunikationsnetzwerk (10), wobei das besagte drahtlose Kommunikationsnetzwerk (10) eine Vielzahl von mehr als zwei Basisstationen (BS0 - BS12) umfasst, wobei eine jede der besagten Basisstationen eine Zelle bedient, wobei jede Zelle eine Vielzahl von Sektoren umfasst; wobei das Verfahren die folgenden Schritte umfasst:
Messen der Verbindungsqualität von mehr als einer drahtlosen Verbindung (14) zwischen dem besagten mobilen Endgerät (12) und mehr als einer der besagten Basisstationen (BS0 - BS12),
Zuweisung von drahtlosen Ressourcen an das besagte mobile Endgerät (12) in mehr als einem bedienenden Sektor, wobei die besagten bedienenden Sektoren mehr als einer der besagten Sektoren (SEC0.0, SEC0.1, SEC0.2, SEC0, SEC1.0, SEC1.1, SEC1, SEC2.0, SEC2.1, SEC2, SEC3 - SEC12) in mehr als einer der besagten Zellen (C0 - C12) sind, wobei jede Zelle eine Vielzahl von Ressourcenzuweisungsmodulen umfasst, wobei ein jedes der besagten Ressourcenzuweisungsmodule mit mindestens einem der besagten Sektoren (SEC0.0, SEC0.1, SEC0.2, SEC0, SEC1.0, SEC1.1, SEC1, SEC2.0, SEC2.1, SEC2, SEC3 - SEC12) assoziiert ist, und wobei die Ressourcenzuweisung von dem einen oder von mehreren mit den besagten mehr als einem bedienenden Sektoren assoziierten Ressourcenzuweisungsmodulen durchgeführt wird.

2. Verfahren nach Anspruch 1, **dadurch gekennzeichnet, dass**
das drahtlose Kommunikationsnetzwerk (10) ein Funkkommunikationsnetzwerk ist, in welchem der gesamte Satz von Funkressourcen möglicherweise an allen Punkten im Bereich des Funkkommunikationsnetzwerks zugewiesen werden kann.

3. Verfahren nach Anspruch 1, **gekennzeichnet durch** das
Messen der Verkehrsanforderungen der mehr als einen drahtlosen Verbindungen (14) zwischen dem besagten mobilen Endgerät (12) und mehr als einer der besagten Vielzahl von Basisstationen (BS0 - BS12).

4. Verfahren nach Anspruch 1, **gekennzeichnet durch** das
Durchführen der Signalverarbeitung auf den an mehr als einer der besagten Vielzahl von Basisstationen (BS0 - BS12) von dem mobilen Endgerät (12) über die mehr als eine drahtlosen Verbindungen (14) empfangenen Signalen.

5. Verfahren nach Anspruch 1, **gekennzeichnet durch** das
Durchführen der Signalverarbeitung auf den an dem mobilen Endgerät (12) über die mehr als eine drahtlosen Verbindungen (14) von der mehr als einen der besagten Vielzahl von Basisstationen (BS0 - BS12) empfangenen Signalen.

6. Verfahren nach Anspruch 1, weiterhin den folgenden Schritt umfassend:
Bestimmen eines Master-Ressourcenzuweisungsmoduls unter den ein oder mehreren mit den besagten mehr als einen bedienenden Sektoren assoziierten Ressourcenzuweisungsmodulen, wobei das besagte Master-Ressourcenzuweisungsmodul die Ressourcenzuweisung in Koordination mit anderen beteiligten Ressourcenzuweisungsmodulen an das besagte mobile Endgerät (12) in den besagten bedienenden Sektoren durchführt.

7. Verfahren nach Anspruch 6, **dadurch gekennzeichnet, dass**
das Bestimmen des Master-Ressourcenzuweisungsmoduls von den mit mehr als einem der bedienenden Sektoren assoziierten Ressourcenzuweisungsmodulen durchgeführt wird.

8. Verfahren nach Anspruch 1, **dadurch gekennzeichnet, dass**
jedes der besagten Ressourcenzuweisungsmodule eine Medienzugriffssteuerungs- bzw. MAC-Instanz ist.

9. Eine Vielzahl von Basisstationen (BS0 - BS12) eines drahtlosen Kommunikationsnetzwerks (10), wobei eine jede der besagten Vielzahl von mehr als zwei Basisstationen (BS0 - BS12) eine Zelle (C0 - C12) bedient, wobei jede Zelle (C0 - C12) eine Vielzahl von Sektoren (SEC0.0, SEC0.1, SEC0.2, SEC0, SEC1.0, SEC1.1, SEC1, SEC2.0, SEC2.1, SEC2, SEC3 - SEC12) umfasst; wobei eine jede der besagten Basisstationen (BS0 - BS12) für das Messen der Verbindungsqualität einer oder mehrerer drahtlosen Verbindungen (14) zu einem mobilen Endgerät (12) ausgelegt ist und Mittel zum Bestimmen von mehr als einem bedienenden Sektoren umfasst, wobei die besagten bedienenden Sektoren mehr als einer der besagten Sektoren (SEC0.0, SEC0.1, SEC0.2, SEC0, SEC1.0, SEC1.1, SEC1, SEC2.0, SEC2.1, SEC2, SEC3 - SEC12) in mehr als einer der besagten Zellen (C0 - C12) sind, wobei die Ressourcenzuweisung an das mobile Endgerät (12) in den mehr als einem bedienenden Sektoren durchgeführt wird, wobei jede Zelle (C0 - C12) eine Vielzahl von Ressourcenzuweisungsmodulen umfasst, wobei ein jedes der besagten Ressourcenzuweisungsmodule mit mindestens einem der besagten Sektoren (SEC0.0, SEC0.1, SEC0.2, SEC0, SEC1.0, SEC1.1, SEC1, SEC2.0, SEC2.1, SEC2, SEC3 - SEC12) assoziiert ist, wobei die Ressourcenzuweisung von dem einen oder von mehreren mit den besagten mehr als einem bedienenden Sektoren assoziierten Ressourcenzuweisungsmodulen durchgeführt wird.

10. Eine Vielzahl von Basisstationen (BS0 - BS12) nach Anspruch 9, **dadurch gekennzeichnet, dass**
die besagte Vielzahl von Basisstationen (BS0 - BS12) Basisstationen eines Funkkommunikationsnetzwerks sind, in welchem der gesamte Satz von Funkressourcen möglicherweise an allen Punkten im Bereich des Funkkommunikationsnetzwerk zugewiesen werden kann.

11. Eine Vielzahl von Basisstationen (BS0 - BS12) nach Anspruch 9,
**dadurch gekennzeichnet, dass**
jede der besagten Vielzahl von Basisstationen (BS0 - BS12) für das Messen der Verkehrsanforderungen der einen oder mehren drahtlosen Verbindungen (14) zu dem besagten mobilen Endgerät (12) ausgelegt ist.

12. Eine Vielzahl von Basisstationen (BS0 - BS12) nach Anspruch 9,
**gekennzeichnet durch**
Mittel zum Durchführen der Signalverarbeitung auf den von dem mobilen Endgerät (12) über die eine oder mehrere drahtlose Verbindungen (14) empfangenen Signalen.

13. Eine Vielzahl von Basisstationen (BS0 - BS12) nach Anspruch 9,
**gekennzeichnet durch** das
Durchführen einer Signalvorverarbeitung auf den über die eine oder mehreren drahtlosen Verbindungen (14) an das mobile Endgerät (12) übertragenen Signalen.

14. Eine Vielzahl von Basisstationen (BS0 - BS12) nach Anspruch 9, weiterhin **gekennzeichnet durch**
Mittel zum Bestimmen eines Master-Ressourcenzuweisungsmoduls unter den ein oder mehreren mit den besagten mehr als einen bedienenden Sektoren assoziierten Ressourcenzuweisungsmodulen, wobei das besagte Master-Ressourcenzuweisungsmodul die Ressourcenzuweisung an das besagte mobile Endgerät (12) in den besagten mehr als einem bedienenden Sektoren durchführt.

15. Eine Vielzahl von Basisstationen (BS0 - BS12) nach Anspruch 14,
**dadurch gekennzeichnet, dass**
das Bestimmen des Master-Ressourcenzuweisungsmoduls von den mit den mehr als einem bedienenden Sektoren assoziierten Ressourcenzuweisungsmodulen durchgeführt wird.

16. Eine Vielzahl von Basisstationen (BS0 - BS12) nach Anspruch 9,
**dadurch gekennzeichnet, dass**
jedes der besagten Ressourcenzuweisungsmodule eine Medienzugriffssteuerungs- bzw. MAC-Instanz ist.

17. Eine Vielzahl von Basisstationen nach Anspruch 9, wobei die mit den mehr als einem bedienenden Sektoren assoziierten Sender in jedem der mehr als einem bedienenden Sektoren dieselben Informationen über dieselben Funkressourcen an das mobile Endgerät übertragen.

18. Eine Vielzahl von Basisstationen nach Anspruch 17, wobei die Anzahl der Sender, welche dieselben Informationen an das mobile Endgerät übertragen, und die Anzahl der Empfänger, welche die von dem mobilen Endgerät an der Basisstation der mehr als einem bedienenden Sektoren empfangenen Signale verarbeiten, in Abhängigkeit von den Verbindungsqualitäten ausgewählt werden, wobei die Empfänger mit den mehr als einem bedienenden Sektoren assoziiert sind.

19. Eine Vielzahl von Basisstationen nach Anspruch 18, wobei die von den Sendern übertragenen Downlink-Signale derart vorcodiert werden, dass sie sich vorteilhaft an dem Empfänger überlagern oder von dem Empfänger derart verarbeitet werden können, dass eine Leistungsverstärkung erzielt wird.

20. Eine Vielzahl von Basisstationen nach Anspruch 17, wobei die Downlink-Signale von unterschiedlichen Sendern unter Verwendung einer Funkfrequenzkombinierung in der Luft addiert werden.

21. Eine Vielzahl von Basisstationen nach Anspruch 9, wobei es sich um Basisstationen unterschiedlicher Typen handelt.

22. Drahtloses Kommunikationsnetzwerk (10) mit einer Vielzahl von Basisstationen (BS0 - BS12) gemäß Anspruch 9, und einem mobilen Endgerät.

23. Drahtloses Kommunikationsnetzwerk nach Anspruch 17, **dadurch gekennzeichnet, dass** es sich bei dem drahtlosen Kommunikationsnetzwerk um ein Funknetzwerk handelt, in welchem der gesamte Satz von Funkressourcen möglicherweise an allen Punkten im Bereich des drahtlosen Netzwerks zugewiesen werden kann.

24. Basisstation der Vielzahl von Basisstationen eines drahtlosen Kommunikationsnetzwerks nach Anspruch 9.

## Revendications

1. Procédé pour effectuer une allocation de ressources à un terminal mobile (12) dans un réseau de communication sans fil (10), ledit réseau de communication sans fil (10) comprenant une pluralité de plus de deux stations de base (BS0 à BS12), chacune desdites stations de base desservant une cellule, chaque cellule comprenant une pluralité de secteurs ; le procédé comprenant les étapes suivantes
mesurer une qualité de liaison de plusieurs liaisons sans fil (14) entre ledit terminal mobile (12) et plusieurs desdites stations de base (BS0 à BS12),
allouer des ressources sans fil audit terminal mobile (12) dans plusieurs secteurs de desserte, lesdits secteurs de desserte étant plusieurs desdits secteurs (SEC0.0, SEC0.1, SEC0.2 SEC0, SEC1.0, SEC1.1, SEC1, SEC2.0, SEC2.1, SEC2, SEC3 à SEC12) dans plusieurs desdites cellules (C0 à C12), alors que chaque cellule comprend une pluralité de modules d'allocation de ressources, chacun desdits modules d'allocation de ressources étant associé à au moins un desdits secteurs (SEC0.0, SEC0.1, SEC0.2, SEC0, SEC1.0, SEC1.1, SEC1, SEC2.0, SEC2.1, SEC2, SEC3 à SEC12), et alors que l'allocation de ressources est effectuée par le ou les modules d'allocation de ressources associés à ladite pluralité de secteurs de desserte.

2. Procédé selon la revendication 1, **caractérisé en ce que**
le réseau de communication sans fil (10) est un réseau de radiocommunication où l'ensemble total de ressources radio peut potentiellement être alloué à tous les points de la zone du réseau de radiocommunication.

3. Procédé selon la revendication 1, **caractérisé par** l'étape suivante
mesurer des exigences de trafic de la pluralité de liaisons sans fil (14) entre ledit terminal mobile (12) et plus d'une station de base parmi ladite pluralité de stations de base (BS0 à BS12),

4. Procédé selon la revendication 1, **caractérisé par** l'étape suivante
effectuer un traitement de signaux sur les signaux reçus à plus d'une station de base parmi ladite pluralité de stations de base (BS0 à BS12) à partir du terminal mobile (12) sur la pluralité de liaisons sans fil (14).

5. Procédé selon la revendication 1, **caractérisé par** l'étape suivante
effectuer un traitement de signaux sur les signaux reçus au niveau du terminal mobile (12) sur la pluralité de liaisons sans fil (14) à partir des stations de base parmi ladite pluralité de stations de base (BS0 à BS12).

6. Procédé selon la revendication 1, comprenant en outre l'étape suivante
déterminer un module d'allocation de ressources maître parmi le ou les modules d'allocation de ressources associés à ladite pluralité de secteurs de desserte, ledit module d'allocation de ressources maître effectuant l'allocation de ressources en coordination avec d'autres modules d'allocation de ressources impliqués audit terminal mobile (12) dans lesdits secteurs de desserte.

7. Procédé selon la revendication 6, **caractérisé par** l'étape suivante
la détermination du module d'allocation de ressources maître est effectuée par les modules d'allocation de ressources associés à plusieurs secteurs de desserte.

8. Procédé selon la revendication 1, **caractérisé par** l'étape suivante
chacun desdits modules d'allocation de ressources est une instance de contrôle d'accès au support (MAC).

9. Pluralité de stations de base (BS0 à BS12) d'un réseau de communication sans fil (10), chaque station de base parmi ladite pluralité de plus de deux stations de base (BS0 à BS12) desservant une cellule (C0 à C12), chaque cellule (C0 à C12) comprenant une pluralité de secteurs (SEC0.0, SEC0.1, SEC0.2, SEC0, SEC1.0, SEC1.1, SEC1, SEC2.0, SEC2.1, SEC2, SEC3 à SEC12), alors que chacune desdites stations de base (BS0 à BS12) est adaptée pour mesurer une qualité de liaison d'une ou de plusieurs liaisons sans fil (14) vers un terminal mobile (12) et comprend des moyens pour déterminer plusieurs secteurs de desserte, lesdits secteurs de desserte étant plus d'un desdits secteurs (SEC0.0, SEC0.1, SEC0.2, SEC0, SEC1.0, SEC1.1, SEC1, SEC2.0, SEC2.1, SEC2, SEC3 - SEC12) dans plus d'une desdites cellules (C0 à C12), alors que l'allocation de ressources au terminal mobile (12) est effectuée dans plusieurs secteurs de desserte, chaque cellule (C0 à C12) comprenant une pluralité de modules d'allocation de ressources, chacun desdits modules d'allocation de ressources étant associé à au moins un desdits secteurs (SEC0.0, SEC0.1, SEC0.2, SEC0, SEC1.0, SEC1.1, SEC1, SEC2.0, SEC2.1, SEC2, SEC3 à SEC12), alors que l'allocation de ressources est effectuée par le ou les modules d'allocation de ressources associés à ladite pluralité de secteurs de desserte.

10. Pluralité de stations de base (BS0 à BS12) selon la revendication 9, **caractérisé en ce que**
ladite pluralité de stations de base (BS0 à BS12) sont des stations de base d'un réseau de radiocommunication où l'ensemble total de ressources radio peut potentiellement être alloué à tous les points dans la zone du réseau de radiocommunication.

11. Pluralité de stations de base (BS0 à BS12) selon la revendication 9, **caractérisé en ce que**
chaque station de base parmi ladite pluralité de stations de base (BS0 à BS12) est adaptée pour mesurer des exigences de trafic de la liaison sans fil ou des liaisons sans fil (14) vers ledit terminal mobile (12).

12. Pluralité de stations de base (BS0 à BS12) selon la revendication 9, **caractérisé par**
des moyens pour effectuer un traitement de signaux sur les signaux provenant du terminal mobile (12) sur la ou les liaisons sans fil (14).

13. Pluralité de stations de base (BS0 à BS12) selon la revendication 9, **caractérisé par** l'étape suivante
effectuer un pré-traitement de signaux sur les signaux transmis au terminal mobile (12) sur la ou les liaisons sans fil (14).

14. Pluralité de stations de base (BS0 à BS12) selon la revendication 9, **caractérisé en outre par**
des moyens pour déterminer un module d'allocation de ressources maître parmi le ou les modules d'allocation de ressources associés à ladite pluralité de secteurs de desserte, ledit module d'allocation de ressources maître effectuant l'allocation de ressources audit terminal mobile (12) dans la pluralité de secteurs de desserte.

15. Pluralité de stations de base (BS0 à BS12) selon la revendication 14, **caractérisé en ce que**
la détermination du module d'allocation de ressources maître est effectuée par les modules d'allocation de ressources associés à la pluralité de secteurs de desserte.

16. Pluralité de stations de base (BS0 à BS12) selon la revendication 9, **caractérisé en ce que**
chacun desdits modules d'allocation de ressources est une instance de contrôle d'accès au support (MAC).

17. Pluralité de stations de base selon la revendication 9, dans laquelle dans chacun parmi la pluralité de secteurs de desserte, les émetteurs associés à la pluralité de secteurs de desserte transmettent les mêmes informations sur les mêmes ressources radio au terminal mobile.

18. Pluralité de stations de base selon la revendication 17, dans laquelle le nombre d'émetteurs qui transmettent les mêmes informations au terminal mobile et le nombre de récepteurs qui traitent les signaux provenant du terminal mobile au niveau de la station de base de la pluralité de secteurs de desserte sont sélectionnés en fonction des qualités de liaison, les récepteurs étant associés à la pluralité de secteurs de desserte.

19. Pluralité de stations de base selon la revendication 18, dans laquelle les signaux de liaison descendante transmis par les émetteurs sont pré-codés de telle sorte qu'ils se superposent de manière avantageuse au niveau du récepteur ou peuvent être traités par le récepteur de telle manière qu'un gain de performance soit atteint.

20. Pluralité de stations de base selon la revendication 17, les signaux de liaison descendante provenant d'émetteurs différents sont ajoutés dans l'air en utilisant une combinaison de radiofréquence.

21. Pluralité de stations de base selon la revendication 9 étant différents types de stations de base.

22. Réseau de communication sans fil (10) comprenant une pluralité de stations de base (BS0 à BS12) selon la revendication 9 et un terminal mobile.

23. Réseau de communication sans fil selon la revendication 17, **caractérisé en ce que** ledit réseau de communication sans fil est un réseau de radio où l'ensemble total de ressources radio peut potentiellement être alloué à tous les points de la zone du réseau sans fil.

24. Station de base parmi la pluralité de stations de base d'un réseau de communication sans fil selon la revendication 9.
